Europäisches Patentamt

European Patent Office

Office européen des brevets

(11) Publication number: **0 273 769 A2**

# EUROPEAN PATENT APPLICATION

(21) Application number: **87311517.4**

(22) Date of filing: **30.12.87**

(51) Int. Cl.⁴: **B 29 C 45/57**

(30) Priority: **31.12.86 AU 9721/86**

(43) Date of publication of application:
**06.07.88 Bulletin 88/27**

(84) Designated Contracting States:
**BE DE FR GB LU NL**

(71) Applicant: **KINGSLEY NOMINEES PTY. LTD.**
**73 Whitehorse Road**
**Balwin Victoria (AU)**

(72) Inventor: **Stones, Dennis Samuel**
**7 Northam Street**
**Glen Waverley Victoria (AU)**

**Bayly, Peter Kingsley**
**Jinchilla Warrandyte Road**
**Kangaroo Ground Victoria (AU)**

(74) Representative: **Brunner, Michael John et al**
**GILL JENNINGS & EVERY 53-64 Chancery Lane**
**London WC2A 1HN (GB)**

(54) Moulding method and apparatus.

(57) An injection mould (1) has a mould cavity (2) divided into a product forming part (4) and a shrinkage compensating part (5) which communicates with the part (4) through an opening (6). The volume of the part (5) can be reduced by moving a plunger (8) upwards. In use, plastics material is injected into the two cavity parts (4 and 5) through a gate (3) and as the material cools and shrinks, the plunger (8) is moved upwards until it is flush with the bottom surface of the part (4). The volume of the part (5) relative to the part (4) necessary to compensate for shrinkage and avoid distortion of the product as it cools will depend upon the nature of the material and other factors. Generally, however, satisfactory results are obtained with the part (5) having a maximum volume of from 4 to 6% of the volume of the part (4).

FIG 1

Bundesdruckerei Berlin

EP 0 273 769 A2

## Description

## MOULDING METHOD AND APPARATUS

This invention relates to the moulding of products by the introduction of heated material under pressure into a mould cavity. The invention is particularly concerned with moulding products from crystalline plastics materials such as those classified as polyolefins, polyamides and polyacetals, by way of example, but it may be applied to amorphous plastics also.

Products made from polyolefins such as polyethylene and polypropylene are commonly manufactured by means of a hot injection moulding process. That is, the plastics material is heated to a flowable state and while in that state is injected under pressure into a mould cavity. Polyolefin materials, however, experience a substantial degree of shrinkage on cooling so that the final product generally has a volume less than that of the mould cavity in which it is formed.

One consequence of the post-moulding shrinkage is that a surface or surfaces of the final product can be distorted so as to not follow the configuration intended. For example, a flat surface may be depressed by the shrinkage to have a shallow concavity. In the case of polypropylene, which is a relatively rigid material, voids may be created within the body of the product thereby disturbing its integrity.

The distortion problems resulting from shrinkage are particularly troublesome in products having relatively thick and thin sections because of the different cooling rates of those sections. In that regard, polyolefins are poor conductors of heat so that the cooling rate is in part dependent on conduction through contact with the body of the mould. Thicker sections shrink more than thinner sections and are therefore more likely to lose contact with the mould body so that an air gap is formed and that reduces the cooling rate of the associated material section.

Various solutions have been proposed for the foregoing problem, but none have been entirely successful. One proposed solution involves including fine talc in the plastics material, but that has the disadvantage of reducing the ability to achieve a smooth surface finish on the product. The use of blowing agents has the same result. Another proposal involves the use of very high injection pressures so as to over-pack the mould cavity, but that does not entirely solve the problem since premature crystallinity can result.

It is an object of the present invention to provide an improved method and apparatus for forming products from plastics materials.

According to one aspect the invention provides a method of forming products from plastics material including the steps of, heating a quantity of plastics material to bring that material to a flowable state, introducing the heated material into a mould cavity and continuing that introduction to at least substantially fill said cavity with a body of said material, allowing said body to cool and solidify while contained in said cavity, reducing the volumetric size of said cavity by a predetermined extent while said cooling is occuring so as to at least substantially compensate for shrinkage of said body, and removing the solidified body from said cavity. It is preferred that the aforementioned reduction in volumetric size is effected in a progressive and continuous manner.

According to another aspect of the invention there is provided a method of forming products from plastics material including the steps of, substantially filling both parts of a two-part mould cavity with a body of hot flowable plastics material, allowing said body to cool while contained in said cavity, transferring said material between said mould cavity parts while it is still in a flowable state so that substantially the entire said body of material is contained in one of said cavity parts, and allowing said body to solidify in said one cavity part. The aforementioned transfer is preferably achieved by positively displacing material from one part of the cavity and simultaneously transferring it to the other part of the cavity. The overall volumetric size of the cavity is thereby reduced and the displacement preferably continues in a progressive manner until the cavity size and shape is complementary to that of the required product.

According to yet another aspect of the invention there is provided apparatus for moulding products from plastics material including, a mould having a cavity formed therein, said cavity comprising a shrinkage compensating part and a product forming part, an opening through which said cavity parts communicate, an entrance port through which material is introduced into said cavity, and means operable to tranfer material through said opening from said shrinkage compensating part to said product forming part.

An embodiment of the invention is described in detail in the following passages of the specificaton which refer to the accompanying drawings. The drawings, however, are merely illustrative of how the invention might be put into effect, so that the specific form and arrangement of the various features as shown is not to be understood as limiting on the invention.

Figure 1 is a semi-diagrammatic sectional view of one form of apparatus suitable for carrying out the method according to the invention.

Figure 2 is a cross-sectional view taken along line II-II Figure 1.

Figure 3 is an enlarged view of portion of the apparatus shown in figure and showing material injected into the mould cavity.

Figure 4 is a view similar to Figure 3 but showing the mould cavity reduced in size to a further extent.

Figure 5 is a view similar to Figure 4 but showing the mould cavity reduced to its final size and shape.

Figure 6 is a diagrammatic view showing the mould separated to permit removal of the formed product.

It will be convenient to hereinafter describe the invention with reference to a particular form of apparatus for carrying out the foregoing method. The invention is not limited, however, to that form of apparatus.

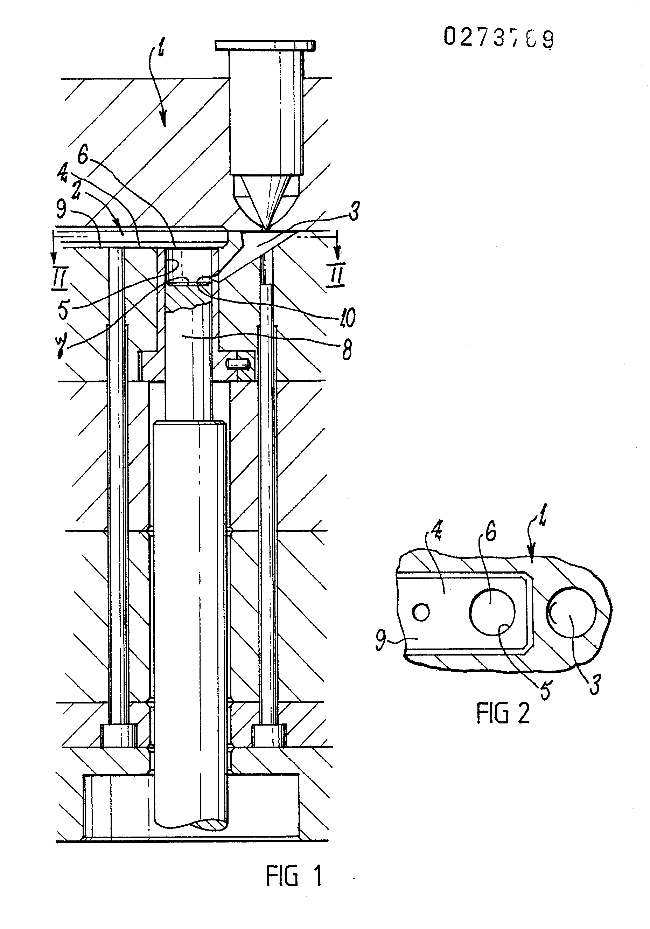

The apparatus, which is shown in part in Figure 1, includes a mould 1 having a cavity 2 shaped as required to produce a particular product. A conventional injection device (not shown) can be arranged to inject flowable plastics material into that cavity through a gate 3, which may also be conventional in terms of shape, size and location. The mould 1 is characterised, however in that the cavity 2 is composed of two parts - a product forming part 4 and a shrinkage compensating part 5 which communicates with the cavity part 4 through an opening 6. Means is provided whereby the size of the cavity part 5 can be varied in the construction shown and that is achieved by forming the base 7 of the cavity part 5 as a movable surface. In the example shown, that base 7 is formed by the end face of a plunger 8 which is movable towards and away from the cavity part 4.

It is preferred, as shown, that the cavity part 5 opens into the cavity part 4 through a substantially flat surface 9 of that cavity part 4. Such an arrangement is not essential, but is generally more convenient than forming the opening 6 in a contoured surface of the cavity 2. Apart from the foregoing, the location of the cavity part 5 can be selected to suit the form of the cavity part 4 and the nature of the product to be formed in the cavity 2. For example, if the product is to have a handle, it may be convenient to locate the cavity part 5 at that part of the cavity part 4 which is to form an outer end portion of the handle.

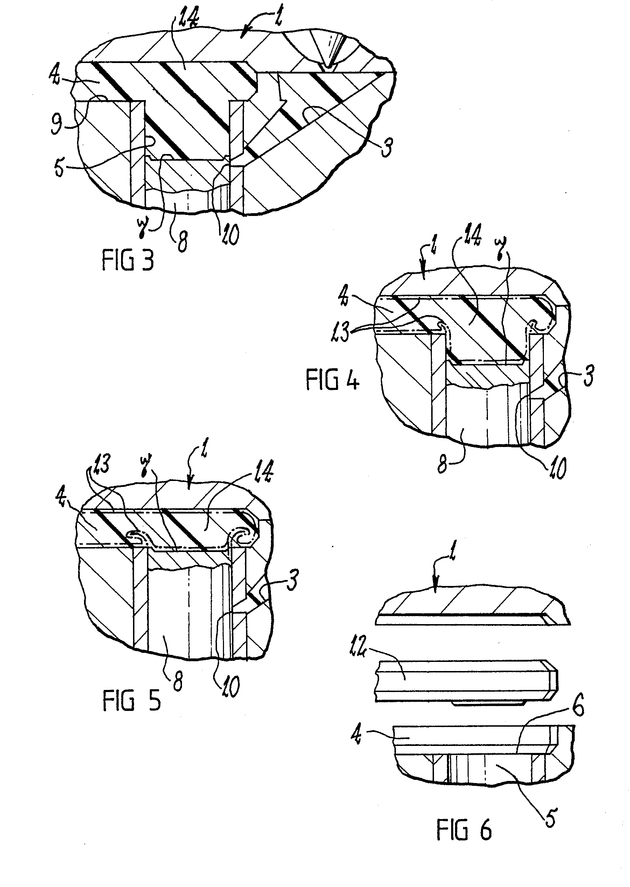

In the arrangement shown, the plunger 8 is preferably slidably mounted in the cavity part 5 so that the effective size of that cavity part 5 is reduced as a consequence of movement of the plunger 8 towards the cavity part 4 (Figures 3 and 4). For that purpose, it is generally convenient to form the cavity part 5 as a cylinder having its axis extending through the general plane of the cavity 9. The opening 6 is therefore generally circular and of a relatively large size as compared with the entrance part 10 through which the mould gate 3 communicates with the cavity 2. It is not necessary, however, that the cavity opening 6 be of the same size and/or shape as the cylindrical body of the cavity part 5 within which the plunger 8 slides. For example, both the plunger 8 and the cavity part 5 may be stepped so as to provide a pair of opposed abutment surfaces which engage to positively limit movement of the plunger 8 towards the cavity part 4.

The plunger 8 is movable between a retracted position and an extended position. The volumetric size of the cavity part 5 is at its maximum and minimum when the plunger 8 is at its retracted (Figure 1) and extended (Figure 5) positions respectively. It is preferred, but not necessary, that the effective size of the cavity part 5 is substantially zero in the extended position of the plunger 8 and that the end face 7 of the plunger 8 forms a segment of the surface 9 of the cavity part 4.

It will be understood from the foregoing that when the plunger 8 is in its retracted position (Figure 1) the cavity part 4 of the mould 1 has a lateral protrusion or sink hole formed by the cavity part 5 and as a result the cavity 2 is unable to form a product of the intended shape. That is, material injected into the mould cavity 2 will define a product having the desired shape apart from a laterally protruding segment having a size and shape consistent with that of the cavity part 5. When the plunger 8 is in the extended position (Figure 5), however, the aforementioned protrusion disappears and the cavity part 4 encloses a space having the configuration of the intended product.

The size of the cavity part 5 can be determined to suit particular circumstances and requirements. It is generally found, however, that satisfactory results are achieved by having the volume of the cavity part 5 when at its maximum effective size, in the range of 4 to 6 percent of the volume of the cavity part 4. That is, for crystalline plastics, and a volume difference of approximately 1 to 2% might be adopted for amorphous plastics. A volumetric relationship above or below either of the stated ranges may be adopted in some circumstances. It has been calculated that a volumetric shrinkage of approximately 3.8 percent occurs in injected moulded products formed of polyolefins, so that a make-up volume of material in the hot state of 4 to 6 percent will usually adequately compensate for the aforementioned shrinkage in such materials.

In the arrangement shown, the mould gate 3 may open into the cavity part 5 , but such an arrangement is not essential once the gate 3 could open direct into the cavity part 4. One advantage of the arrangement as shown, is that the gate 3 is positively closed by the plunger 8 during movement of the plunger towards the extended position (see Figure 3) and backward flow of material out of the mould cavity 2 is thereby positively prevented. Under normal circumstances, however, such backward flow is resisted to a sufficient extent by the relatively small size of the entrance part 10 and the relatively rapid solidification of material at the gate 3.

When apparatus of the foregoing kind is in use, hot plastics material is introduced into the mould 1 through the gate 3 while the plunger 8 is in its retracted position as shown in Figure 1. Material entering the mould 1 passes through the cavity part 5 and into the cavity part 4 to fill both of those cavity parts 4 and 5. The injection of material is stopped at a time which is predetermined to provide complete filling of the cavity 2 while subjected to a particular internal pressure or pressure range.

Filling of the connected cavity parts 4 and 5 by the hot flowable material constitutes the first stage of the process. The second stage commences with initiation of movement of the plunger 8 towards its extended position. That initiation may take place at the time of ceasing the first stage, or slightly in advance of or slightly after that time. The second stage is completed when the plunger 8 reaches its extended position as shown in Figure 5, and the plunger 8 is held at that position for the necessary cooling phase of the mould 1 and may not be retracted until after the product 12 (Figure 6) is expelled from the mould 1.

The working pressure for the plunger may be greater or less than the pressure under which material is injected into the mould 1, and the selection will depend at least to some extent on the configuration of the mould cavity. In one example arrangement the working pressure is approximately 10 to 20% of the injection pressure. The end face 7 of the plunger 8 may be flat, contoured, or patterned, as required to blend into or form a continuation of the adjacent surface 9 of the cavity part 4 so as not to disturb the final appearance of the moulded product 12.

It is found that a skin 13 (Figures 4 and 5) forms around the body 14 of material contained in the mould cavity 2 before and/or during movement of the plunger 8 towards its extended position. That skin 13 is formed at the surfaces of the cavity parts 4 and 5 because of the higher cooling rate at the interface between the mould 1 and the contained material. That is, solidification of the material commences at the interface between the body 14 of injected material and the surfaces of the mould cavity 2. The resulting core of relatively hot and less solidified material therefore extends across the imaginary (at that time) boundary between the two cavity parts 4 and 5 .

As the plunger 8 moves towards its extended position, it pushes material from the cavity part 5 into the cavity part 4 so as to progressively increase the amount of material contained in the latter cavity part. That increase serves to at least substantially make up for losses in material volume within the cavity part 4 resulting from shrinkage during cooling and in some cases may exceed the expected losses due to shrinkage. In any event, the resulting progressive addition to the relatively hot core of material in the cavity part 4 holds the material skin 13 in contact with the surrounding surface of the mould 1 and thereby promotes rapid cooling of the material. As will be seen from Figures 4 and 5, portion of the skin 13 which is displaced from the cavity part 5 is caused to punctuate into the material body 14 within the cavity part 4.

Also, the progressive addition of material to the cavity part 4 counters the problems normally associated with uneven cooling of thick and thin product sections, since it ensures that an expansion effect is maintained in the thicker sections during their relatively slow cooling process. Distortion due to shrinkage of such sections is thereby avoided or at least substantially alleviated.

The second stage of the process is completed when the cavity plunger 8 reaches the end of its stroke into the extended position. At that time, the outer end of the plunger 8 is preferably located so that its end face 7 establishes the form and relative disposition of at least part of a surface of the moulded product 2. The mould 1 may be retained in a closed position for a suitable cooling period after completion of that second stage. The moulded product 12 may be removed from the mould 1 in any suitable fashion.

It appears that the second stage of the process causes an inward folding of part of the skin 13 as referred to above. In the example described above, movement of the plunger 8 towards its extended position progressively forces that part of the skin 13 which forms around the cylindrical surface of the cavity part 4, to move into the body 14 of material within the cavity part 4 . Some folding of that skin part occurs during that process, but such folding does not disturb the integrity of the product 12. The pressure applied by the plunger 8 ensures that the core material is closely packed against the folded skin part. Furthermore, the appearance of the product will not be disturbed, at least substantially, by that folding of the skin 13. It is normally found that the cleavage line which is formed at the outside surface of the product 12 because of that folding, cannot be detected without the aid of magnification. As a precaution, however, the product may be designed so that the cleavage line is located at a step, groove, ridge, or other discontinuity in the product surface and is thereby hidden from detection under normal circumstances.

It is found that the method described results in well finished products of predictable and accurate form. Surface distortions due to uneven cooling rates and high shrinkage rates are virtually eliminated so that it is possible to form quality products of complex shape which could not be formed by conventional injection moulding techniques.

Various alterations, modifications and/or additions may be introduced into the constructions and arrangements of parts previously described without departing from the spirit or ambit of the invention as defined by the appended claims.

## Claims

1. A method of forming products from plastics material including the steps of, heating a quantity of plastics material to bring that material to a flowable state, introducing the heated material into a mould cavity and continuing that introduction to at least substantially fill said cavity with a body of said material, and allowing said body to cool and solidify while contained in said cavity; characterised in that the volumetric size of said cavity (2) is reduced by a predetermined extent while said cooling is occuring so as to at least substantially compensate for shrinkage of said body, and the solidified body is subsequently removed from said cavity (2).

2. A method according to claim 1, wherein said reduction is effected in a progressive and continuous manner.

3. A method according to claim 1 or 2, wherein said cavity (2) includes a shrinkage compensating part (5) and a product forming part (4) and said reduction in volumetric size results in material being displaced from said shrinkage compensating part (5) and transferred to said product forming part (4).

4. A method according to claim 3, wherein the volumetric size of said product forming part (4) remains substantially unchanged.

5. A method according to claim 3 or 4, wherein said displacement commences at about the time of concluding said cavity filling operation and while the material of said body is in a flowable state.

6. A method according to claim 3 or 4, wherein said displacement results in said material being substatnially completely exhaused from said shrinkage compensating part.

7. A method according to any one of claims 3 to 6, wherein said material is introduced into said product forming part (4) by way of said shrinkage compensating part (5).

8. A method according to claim 7, wherein said material is introduced into said shrinkage compensating part (5) by way of an entrance port (10) and the two said cavity parts (4,5) are interconnected by an opening (6) which is large relative to said entrance port (10).

9. A method according to claim 8, wherein said entrance port 10 is closed during said tranfer.

10. A method according to any one of claims 3 to 9, wherein said material is introduced into said cavity (2) under pressure, and said displacement of material from said shrinkage compensating part (5) occurs at a pressure substantially less then the first said pressure.

11. A method of forming products from plastics material including the steps of, substantially filling a mould cavity with a body of hot flowable plastics material, and allowing said body to cool while contained in said cavity; characterised in that said cavity (2) is formed of two interconnected parts (4,5), said material is transferred between said mould cavity parts (4,5) while it is still in a flowable state so that substantially the entire said body of material is contained in one of said cavity parts (4), and said body is allowed to solidify in said one cavity part (4).

12. A method according to claim 11, wherein said transfer is effected in a continuous manner.

13. Apparatus for moulding products from plastics material including, a mould (1) having a cavity (2) formed therein, and an entrance port (10) through which material is introduced into said cavity; characterised in that said cavity (2) comprises a shrinkage compensating part (5) and a product forming part (4), an opening (6) is provided through which said cavity parts (4,5) communicate, and an entrance port (10) through which material is introduced into said cavity; and characterised in that means (8) is operable to tranfer material through said opening (6) from said shrinkage compensating part (5) to said product forming part (4).

14. Apparatus according to claim 13, wherein said opening (6) is large relative to said entrance port (10).

15. Apparatus according to claim 13 or 14, wherein a plunger (8) is slideably mounted in said shrinkage compensating part (5) for movement towards and away from said product forming part (4), and an end surface (7) of said plunger (8) forms a moveable surface of said shrinkage compensating part (5).

16. Apparatus according to claim 15, wherein said plunger (8) is moveable in a continuous manner between a position remote from said opening (6) and a position at which said end surface (7) is adjacent said opening (6).

0273769

FIG 1

FIG 2

FIG 3

FIG 4

FIG 5

FIG 6